# DEMANDE DE BREVET EUROPEEN

(11) **EP 0 860 367 A1**
(43) Date de publication de la demande: **26.08.1998**
(21) Numéro de dépôt: 98440026.7
(22) Date de dépôt: 13.02.1998
(51) Int. Cl.: B65D 6/34, B29C 70/82

(54) **Paroi ou partie de paroi pour conteneur, conteneur correspondant et procédé de fabrication d'une telle paroi ou partie de paroi**

(30) Priorité: 14.02.1997 FR 9701920
(71) Demandeur: Groupe Maillard Industrie En Abrégé GMI,(Société Anonyme), 25110 Baume-les-Dames (FR)
(72) Inventeur: Maillard, Gilbert, 25200 Montbeliard (FR)
(74) Mandataire: Nuss, Pierre

(57) **Abrégé**

La présente invention a pour objet une paroi ou une partie de paroi pour conteneur, un conteneur correspondant et un procédé de fabrication d'une telle paroi ou partie de paroi.

Cette paroi ou partie de paroi, notamment paroi ou partie de paroi de conteneur, de caisse ou d'un réceptacle similaire, est constituée par un panneau grillagé (1) composé d'un réseau de fils métallique (2) entrecroisés et assemblés au niveau de leurs intersections et intimement solidarisé avec au moins un panneau ou une feuille (4) en un matériau thermoplastique, rapporté(e) sur ce panneau grillagé (1) par thermoformage, de manière à former une paroi ou partie de paroi continue pleine sur au moins une partie de sa surface, le matériau duclit

## Description

La présente invention concerne le domaine du stockage et de la manipulation de pièces ou d'ensembles de pièces, notamment de petite taille et en vrac, et a pour objet une paroi ou une partie de paroi pour conteneur, un conteneur correspondant, ainsi qu'un procédé de fabrication d'une telle paroi ou partie de paroi.

On connaît déjà divers types de conteneurs ou de réceptacles similaires présentant des structures et des parois variées.

On connaît notamment des conteneurs formés de panneaux grillagés, démontables et repliables ou non, qui présentent de nombreux avantages, à savoir, une grande résistance mécanique, une faculté de déformation élastique, un faible poids, un prix de revient compétitif, une grande longévité à l'usage et une structure peu encombrante, permettant d'aboutir à un volume utile intérieur maximal pour un encombrement extérieur minimal.

Toutefois, ces parois grillagées ne permettent pas de stocker et de manipuler en vrac des articles ou objets de faibles tailles, ni des objets de faibles sections (tels que des tubes ou des profilés), dont certaines dimensions sont inférieures aux dimensions des ouvertures des mailles et qui peuvent passer au travers de celles-ci.

En outre, les objets ou articles stockés dans ces conteneurs à parois grillagées ne sont aucunement protégées de l'extérieur, notamment pas contre la poussière, la pluie ou les projections.

De plus, un resserrement des fils formant ces parois grillagées entraînerait une élévation sensible, et non acceptable, du poids et du prix de revient de ces parois, ainsi qu'une perte totale de leur possibilité de déformation élastique, sans pour autant assurer une protection efficace vis à vis de l'extérieur.

En vue de tenter de pallier les inconvénients précités, il a été proposé de fixer sur les faces internes des panneaux grillagés, des panneaux en carton ou en matière plastique.

Néanmoins, une telle adaptation nécessite des opérations supplémentaires d'assemblage et de fixation, ne constitue pas une solution fiable dans le temps (détachement des panneaux rapportés) et entraîne une perte sensible de volume utile interne.

Il a également été proposé de réaliser les parois des conteneurs en des panneaux pleins en tôle ou en un matériau plastique. Toutefois, la première solution ne permet pas aux parois d'absorber des chocs, mêmes faibles, sans déformations permanentes et la seconde solution ne fournit pas des parois suffisamment rigides et résistantes pour l'utilisation industrielle envisagée.

La présente invention a notamment pour objet de pallier les inconvénients précités.

A cet effet, elle a pour principal objet une paroi ou partie de paroi, notamment paroi ou partie de paroi de conteneur, de caisse ou d'un réceptacle similaire, caractérisée en ce qu'elle est constituée par un panneau grillagé composé d'un réseau de fils métallique entrecroisés et assemblés au niveau de leurs intersections et intimement solidarisé avec au moins un panneau ou une feuille en un matériau thermoplastique, rapporté(e) sur ce panneau grillagé par thermoformage, de manière à former une paroi ou partie de paroi continue pleine sur au moins une partie de sa surface, le matériau dudit au moins un panneau ou de ladite au moins une feuille s'étendant, après déformation et solidarisation par thermoformage, de la face extérieure de la paroi ou partie de paroi jusqu'à un plan situé au moins au niveau de la surface de contact intérieure du panneau grillagé formant ladite paroi ou partie de paroi, préférentiellement légèrement au-delà de cette surface vers l'intérieur du réceptacle, de manière à constituer une surface d'appui intérieure sensiblement plane, continue ou non.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation frontale de la face extérieure d'une paroi selon l'invention ;
la figure 2 est une vue en élévation frontale de la face intérieure de la paroi représentée à la figure 1 ;
la figure 3 est une vue partielle en coupe transversale d'une paroi selon un premier mode de réalisation de l'invention ;
la figure 4 est une vue partielle en coupe transversale d'une paroi selon un deuxième mode de réalisation de l'invention, et,
la figure 5 est une vue partielle en coupe transversale d'une paroi selon un troisième mode de réalisation de l'invention.

Conformément à cette dernière, et comme le montrent les figures des dessins annexés, la paroi ou partie de paroi 5, notamment pour conteneur, caisse ou réceptacle similaire, est principalement constituée par un panneau grillagé 1 composé d'un réseau de fils métallique 2 entrecroisés et assemblés au niveau de leurs intersections et intimement solidarisé avec au moins un panneau ou une feuille 4 en un matériau thermoplastique, rapporté(e) sur ce panneau grillagé 1 par thermoformage, de manière à former une paroi ou partie de paroi 5 continue pleine sur au moins une partie de sa surface, le matériau dudit au moins un panneau ou de ladite au moins une feuille 4 s'étendant, après déformation et solidarisation par thermoformage, de la face extérieure 6 de la paroi ou partie de paroi 5 jusqu'à un plan 7 situé au moins au niveau de la surface de contact intérieure du panneau grillagé 1 formant ladite paroi ou partie de paroi 5, préférentiellement légèrement au-delà de cette surface vers l'intérieur du réceptacle, de manière à constituer une surface d'appui intérieure sensiblement plane, continue ou non.

La paroi ou partie de paroi 5 ainsi obtenue présente une structure composite fortement soudée, obtenue par imbrication partielle ou totale de ses deux composantes constitutives, plus particulièrement par recouvrement partiel ou total des fils 2 par le matériau thermoplastique constituant la ou les feuille(s) ou le ou les panneau(x) 4 rapportée(e)(s) et par encastrement ajusté, avec conjugaison de forme, de portions de ce ou des dernier(s) dans les ouvertures 2' des mailles dudit panneau grillagé 1.

On obtient ainsi au moins une portion de paroi interne non ajourée, formant barrière entre l'intérieur et l'extérieur du conteneur ou réceptacle similaire.

De plus, une telle réalisation de la paroi ou de la partie de paroi 5 permet de disposer d'une surface d'appui intérieure continue plane, sans élément proéminent vers l'intérieur et sans perte sensible de volume intérieur, puisque le matériau thermoplastique est essentiellement situé dans l'épaisseur du panneau grillagé 1.

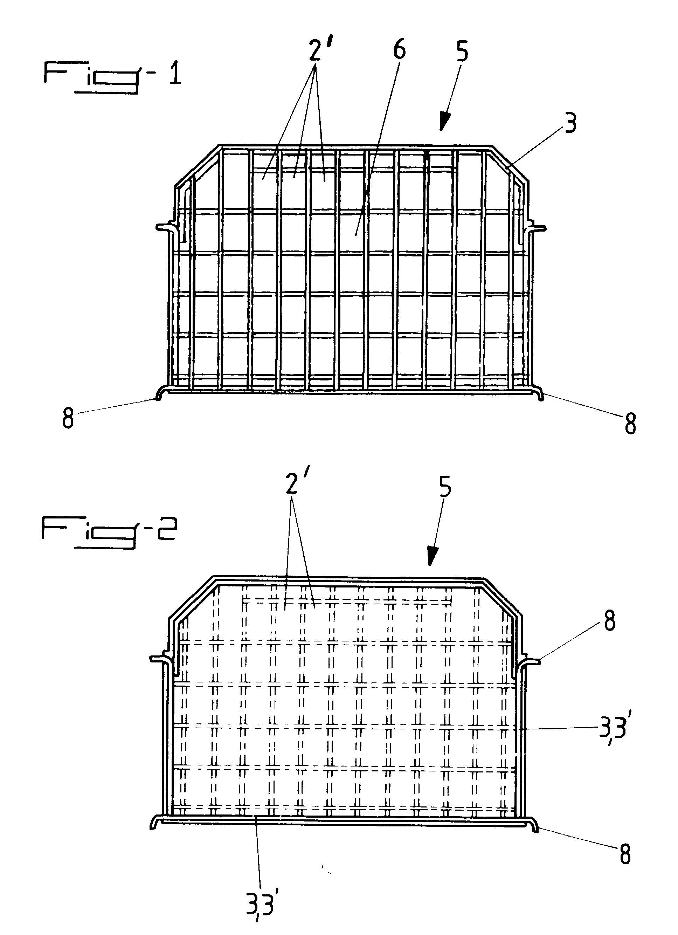

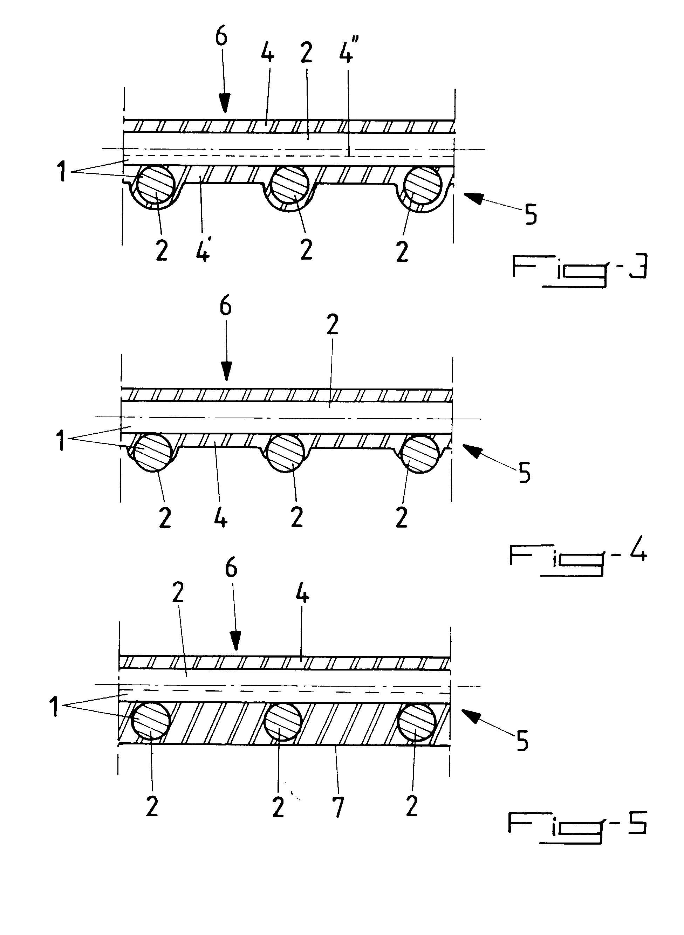

Selon une première variante de réalisation de l'invention, représentée à la figure 3 des dessins annexés, la paroi ou partie de paroi 5 comporte deux panneaux ou feuilles 4, 4' de matériau thermoplastique, rapporté(e)s chacun(e) sur l'une des faces du panneau grillagé 1, les fils 2 formant ce dernier étant totalement enrobés par ledit matériau thermoplastique au niveau de la zone d'application desdits panneaux ou desdites feuilles 4 et 4'.

Le panneau grillagé 1 est ainsi pris en sandwich entre deux panneaux ou feuilles 4, ces dernièr(e)s étant soudé(e)s l'un(e) à l'autre au niveau de leurs surfaces en contact et formant un unique panneau de matériau thermoplastique renforcé par une armature métallique noyé dans son épaisseur.

Toutefois, conformément à une seconde variante de réalisation préférée de l'invention, aboutissant à une construction plus légère et d'un prix de revient moins élevé, la paroi ou partie de paroi 5 ne comporte qu'un(e) unique panneau ou feuille 4 rapporté(e) sur la face extérieure du panneau grillagé 1.

De manière avantageuse, le panneau ou la feuille 4 thermoformé(e) s'étend sur sensiblement toute la surface du panneau grillagé 1 et vient également en prise, avec un recouvrement au moins partiel, au niveau du cadre périphérique 3 délimitant ce dernier (figure 4).

Comme le montre cette dernière figure, le panneau ou la feuille de matériau thermoplastique 4 recouvre au moins partiellement les fils métalliques 2 formant le panneau grillagé 1 et s'étend dans les ouvertures 2' présentes dans le réseau de fils métalliques 2 entrecroisés formant le panneau grillagé 1, en les obturant.

Le panneau ou la feuille 4 étant rapporté(e) par thermoformage sur le panneau grillagé 1 par l'extérieur, le matériau thermoplastique recouvre complètement, sensiblement en les enrobant totalement, les fils 2 du panneau grillagé 1 situés le plus à l'extérieur et partiellement, en les enrobant au delà de la moitié de leur pourtour extérieur, les fils 2 situés le plus à l'intérieur du panneau grillagé 1 et formant la surface de contact intérieur dudit panneau 1, ainsi que les fils 3' formant le cadre 3.

On aboutit ainsi à un assemblage résistant et à une solidarisation surfacique importante entre ledit panneau ou feuille 4 et le panneau grillagé 1.

Le matériau thermoplastique présentera préférentiellement des propriétés de déformation élastique qui, compte tenu de sa solidarisation intime avec le panneau grillagé 1 et des propriétés de déformation élastique propre à ce dernier, permettront d'aboutir à un panneau 5 composite ayant des propriétés similaires.

Selon une caractéristique de l'invention, le panneau ou la feuille 4 en matériau thermoplastique peut avantageusement consister en du polyéthylène, du polypropylène, du polycarbonate, du polystyrène, de l'ABS (acrylonitrite - butadiène - styrène) ou un polymère thermoformable analogue, transparent ou opaque, en fonction de la nécessité soit de cacher ou de protéger le contenu, soit de pouvoir en déterminer la nature.

Conformément à un mode de réalisation préféré de l'invention, représenté à la figure 5 des dessins annexés, le matériau thermoplastique dudit panneau ou de ladite feuille rapportée 4 recouvre totalement, en les enrobant complètement, les fils métalliques 2 entrecroisés formant le panneau grillagé 1, et au moins partiellement les fils ou tiges métalliques 3' formant le cadre périphérique 3 dudit panneau grillagé 1.

Avantageusement, le matériau thermoplastique du panneau ou de la feuille rapporté(e) 4 s'étend, après déformation et solidarisation par thermoformage, de la face extérieure 6 de la paroi ou partie de paroi 5 jusqu'à un plan 7 situé légèrement au-delà de la surface de contact intérieure du panneau grillagé 1 formant ladite paroi ou partie de paroi 5, les éléments ou organes 8 de liaison, d'assemblage, de manipulation et/ou de verrouillage intégrés à ou rapportés sur le panneau grillagé 1 concerné, ainsi que, le cas échéant, une zone environnante correspondante du panneau grillagé 1, n'étant pas recouverts par le matériau thermoplastique du panneau ou de la feuille rapporté(e) 4.

Au niveau des bords des panneaux grillagés 4, les panneaux ou feuilles de matériau thermoplastique peuvent, en outre, comporter des prolongements en forme de lèvres, rapportés ou d'un seul tenant avec lesdit(e)s panneaux ou feuilles, obturant les interstices et les passages entre les panneaux grillagés et/ou entre ces derniers et les poteaux ou l'embase, et permettant d'assurer une fermeture et un cloisonnement sensiblement soutenus et non interrompus ou ajourés.

Cet enrobage total du panneau grillagé 1 assure, en outre, une protection des fils 2 qui les constituent, contre les agressions chimiques, physiques et mécaniques.

La présente invention a également pour objet un conteneur, notamment à embase en forme de palette, comprenant quatre parois latérales formant avec la paroi de fond solidaire de ladite embase un réceptacle parallélipipédique ouvert sur le dessus, caractérisé en ce que l'une au moins des parois latérales verticales ou de fond dudit conteneur, préférentiellement au moins toutes les parois latérales, ou une partie de cette ou de ces parois, consiste en une paroi ou une partie de paroi 5 telle que décrite ci-dessus.

En variante, le conteneur peut également être du type comportant une embase en forme de palette, des montants latéraux, repliables ou non, en forme de tubes et montés au niveau des coins de ladite embase et, au moins une paroi latérale s'étendant, chacune, entre deux montants verticaux, en étant repliable ou non vers l'extérieur dudit conteneur, caractérisé en ce que l'une au moins des parois latérales ou de fond dudit conteneur, préférentiellement au moins toutes les parois latérales verticales, ou une partie de cette ou de ces parois, consiste en une paroi ou une partie de paroi 5 telle que décrite précédemment.

Un conteneur du type précité est notamment décrit dans la demande de brevet français n° 2 732 668.

Enfin, l'invention a également pour objet un procédé de fabrication d'une paroi ou d'une partie de paroi telle que décrite ci-dessus, caractérisé en ce qu'il consiste essentiellement à mettre en place un panneau grillagé 1 dans un moule adapté disposé dans une machine à thermoformer, à chauffer un panneau ou une feuille 4 d'un matériau thermoplastique jusqu'à sa température de déformation plastique, puis à poser ledit panneau ou ladite feuille 4 sur le panneau grillagé 1 et à générer une aspiration sous le panneau grillagé 1, ou une surpression sur la feuille ou le panneau 4, de manière à réaliser une pénétration dudit matériau thermoplastique dans les mailles dudit panneau grillagé 1 et un recouvrement total ou partiel des fils 2 constituant ce dernier, sans rupture de la continuité de la structure dudit panneau ou de ladite feuille rapportée 4, à laisser ensuite refroidir la paroi ou la partie de paroi 5 composite ainsi obtenue et, enfin, à réaliser des opérations de finition, notamment de découpe, au niveau des bords du panneau ou de la feuille rapporté(e) 4 et/ou au niveau de certains au moins des éléments ou organes 8 de liaison, d'assemblage, de manipulation ou de verrouillage présents sur le panneau grillagé.

La température de chauffage du panneau ou de la feuille 4 sera fonction de la nature du matériau polymère utilisé (généralement entre 120° C et 200° C) et devra permettre une déformation importante de ce dernier, l'opération étant maintenue jusqu'à obtention du degré d'encastrement ou de recouvrement souhaité (partiel ou total), en évitant toutefois toute rupture ou toute déchirure de ce panneau ou de cette feuille au cours de sa déformation plastique.

Ce dernier ou cette dernière présentera avantageusement une épaisseur comprise entre 1 à 10 mm, préférentiellement entre 1 à 3 mm.

Il convient de noter que le procédé précité peut être appliqué à des panneaux grillagés 1 déjà en service autant qu'à des panneaux grillagés 1 neufs, et aboutir à la transformation totale ou partielle d'un conteneur à panneaux grillagés 1 existant en un conteneur à paroi(s) composite(s) 5 selon l'invention.

Par ailleurs, en vue de conserver les possibilités de manipulation des panneaux grillagés habituels et d'en permettre le remplacement par des parois 5 selon l'invention, il peut être prévu de mettre en place, avant la pose du panneau ou de la feuille en matériau thermoplastique, des caches au niveau de certains au moins des éléments ou organes 8 de liaison, d'assemblage, de manipulation ou de verrouillage présents sur le panneau grillagé 1.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Paroi ou partie de paroi de conteneur ou d'un réceptacle similaire, constituée par un panneau grillagé composé d'un réseau de fils métallique entrecroisés et assemblés au niveau de leurs intersections, caractérisée en ce que ledit panneau grillagé (1) est intimement solidarisé avec au moins un panneau ou une feuille (4) en un matériau thermoplastique, rapporté(e) sur ce panneau grillagé (1) par thermoformage, de manière à former une paroi ou partie de paroi (5) continue pleine sur au moins une partie de sa surface, le matériau dudit au moins un panneau ou de ladite au moins une feuille (4) s'étendant, après déformation et solidarisation par thermoformage, de la face extérieure (6) de la paroi ou partie de paroi (5) jusqu'à un plan (7) situé au moins au niveau de la surface de contact intérieure du panneau grillagé (1) formant ladite paroi ou partie de paroi (5), préférentiellement légèrement au-delà de cette surface vers l'intérieur du réceptacle, de manière à constituer une surface d'appui intérieure sensiblement plane.

2. Paroi ou partie de paroi selon la revendication 1, caractérisée en ce qu'elle comporte un(e) unique panneau ou feuille (4) rapporté(e) sur la face extérieure du panneau grillagé (1).

3. Paroi ou partie de paroi selon la revendication 1, caractérisée en ce qu'elle comporte deux panneaux ou feuilles (4, 4') de matériau thermoplastique, rapporté(e)s chacun(e) sur l'une des faces du panneau grillagé (1), les fils (2) formant ce dernier étant totalement enrobés par ledit matériau thermoplastique au niveau de la zone d'application desdits panneaux ou desdites feuilles (4 et 4').

4. Paroi ou partie de paroi selon l'une quelconque des revendications 2 et 3, caractérisée en ce que le panneau ou la feuille (4) thermoformé(e) s'étend sur sensiblement toute la surface du panneau grillagé (I) et vient également en prise, avec un recouvrement au moins partiel, au niveau du cadre périphérique (3) délimitant ce dernier.

5. Paroi ou partie de paroi selon l'une quelconque des revendications 2 et 4, caractérisée en ce que le panneau ou la feuille de matériau thermoplastique (4) recouvre au moins partiellement les fils métalliques (2) formant le panneau grillagé (1) et s'étend dans les ouvertures (2') présentes dans le réseau de fils métalliques (2) entrecroisés formant le panneau grillagé (1), en les obturant.

6. Paroi ou partie de paroi selon la revendication 5, caractérisée en ce que le panneau ou la feuille (4) en matériau thermoplastique consiste en du polyéthylène, du polypropylène, du polycarbonate, du polystyrène, de l'ABS ou un polymère thermoformable analogue, transparent ou opaque, et en ce que le matériau thermoplastique dudit panneau ou de ladite feuille rapportée (4) recouvre totalement, en les enrobant complètement, les fils métalliques (2) entrecroisés formant le panneau grillagé (1), et au moins partiellement les fils ou tiges métalliques (3') formant le cadre périphérique (3) dudit panneau grillagé (1).

7. Paroi ou partie de paroi selon l'une quelconque des revendications 5 et 6, caractérisée en ce que les éléments ou organes (8) de liaison, d'assemblage, de manipulation et/ou de verrouillage intégrés à ou rapportés sur le panneau grillagé (1) concerné, ainsi que, le cas échéant, une zone environnante correspondante du panneau grillagé (1), ne sont pas recouverts par le matériau thermoplastique du panneau ou de la feuille rapporté(e) (4).

8. Conteneur, notamment à embase en forme de palette, comprenant quatre parois latérales formant avec la paroi de fond solidaire de ladite embase un réceptacle parallélipipédique ouvert sur le dessus, caractérisé en ce que l'une au moins des parois latérales ou de fond dudit conteneur, préférentiellement au moins toutes les parois latérales, ou une partie de cette ou de ces parois, consiste en une paroi ou une partie de paroi (5) selon l'une quelconque des revendications 1 à 7.

9. Conteneur, du type comportant une embase en forme de palette, des montants latéraux, repliables ou non, en forme de tubes et montés au niveau des coins de ladite embase et, au moins une paroi latérale s'étendant, chacune, entre deux montants verticaux, en étant repliable ou non vers l'extérieur dudit conteneur, caractérisé en ce que l'une au moins des parois latérales ou de fond dudit conteneur, préférentiellement au moins toutes les parois latérales, ou une partie de cette ou de ces parois, consiste en une paroi ou une partie de paroi (5) selon l'une quelconque des revendications 1 à 7.

10. Procédé de fabrication d'une paroi ou d'une partie de paroi selon l'une quelconque des revendications 1, 2 et 4 à 7, caractérisé en ce qu'il consiste essentiellement à mettre en place un panneau grillagé (1) dans un moule adapté disposé dans une machine à thermoformer, à chauffer un panneau ou une feuille (4) d'un matériau thermoplastique jusqu'à sa température de déformation plastique, puis à poser ledit panneau ou ladite feuille (4) sur le panneau grillagé (1) et à générer une aspiration sous le panneau grillagé (1), ou une surpression sur le panneau ou la feuille (4), de manière à réaliser une pénétration dudit matériau thermoplastique dans les mailles dudit panneau grillagé (1) et un recouvrement total ou partiel des fils (2) constituant ce dernier, sans rupture de la continuité de la structure dudit panneau ou de ladite feuille rapportée (4), à laisser ensuite refroidir la paroi ou la partie de paroi (5) composite ainsi obtenue et, enfin, à réaliser des opérations de finition, notamment de découpe, au niveau des bords du panneau ou de la feuille rapporté(e) (4) et/ou au niveau de certains au moins des éléments ou organes (8) de liaison, d'assemblage, de manipulation ou de verrouillage présents sur le panneau grillagé.

11. Procédé selon la revendication 10, caractérisé en ce qu'il consiste à mettre en place, avant la pose du panneau ou de la feuille en matériau thermoplastique, des caches au niveau de certains au moins des éléments ou organes (8) de liaison, d'assemblage, de manipulation ou de verrouillage présents sur le panneau grillagé (1).
